# EUROPÄISCHE PATENTANMELDUNG

(11) **EP 4 198 712 A1**
(43) Veröffentlichungstag der Anmeldung: **21.06.2023**
(21) Anmeldenummer: 22214205.1
(22) Anmeldetag: 16.12.2022
(51) Int. Cl.: G06F 8/00, G06F 8/65, F04C 25/02, F04D 19/04

(54) **VAKUUMSYSTEM UND VERFAHREN ZUM BETREIBEN EINES SOLCHEN**

(71) Anmelder: Pfeiffer Vacuum Technology AG, 35614 Asslar (DE)
(72) Erfinder: BÖTTCHER, Jochen, 35394 Gießen-Rödgen (DE)
(74) Vertreter: Manitz Finsterwald Patent- und Rechtsanwaltspartnerschaft mbB

(57) **Zusammenfassung**

Die Erfindung betrifft ein Vakuumsystem, welches eine erste Komponente und eine zweite Komponente aufweist, die jeweils einen computerausführbaren Softwarecode zum Betreiben des Vakuumsystems umfassen, wobei das Vakuumsystem dazu ausgebildet ist, wahlweise durch die erste Komponente und/oder durch die zweite Komponente betrieben zu werden, und wobei das Vakuumsystem dazu ausgebildet ist, im Falle einer Aktualisierung des Softwarecodes der ersten Komponente zumindest teilweise durch die zweite Komponente weiterbetrieben zu werden.

## Beschreibung

Die Erfindung betrifft ein Vakuumsystem sowie ein Verfahren zum Betreiben eines solchen.

Vakuumsysteme zur Erzeugung, Aufrechterhaltung und/oder Messung eines Vakuums verfügen über Einheiten zur Informationsverarbeitung, welche gemeinsam mit entsprechenden Aktuatoren die Funktion einzelner Vakuumkomponenten und den Datenhaushalt für den Anwender bereitstellen. Typischerweise werden als Informationsverarbeitungseinheiten Mikrocontroller (engl. "embedded systems") verwendet, auf denen eine Vielzahl von Anweisungen, d.h. Softwarecode, ausgeführt wird. Je nach Aufbau, Komplexität und Funktion einer Vakuumkomponente kann eine Vielzahl von unterschiedlichen Mikrocontrollern mit jeweils eigenem Softwarecode vorhanden sein, die im Zusammenspiel und mit Hilfe entsprechender Aktuatoren die Funktion der Vakuumkomponente bereitstellen.

Der Softwarecode der Mikrocontroller wird während der Lebensdauer des Vakuumsystems typischerweise mehrfach geändert bzw. aktualisiert, beispielsweise zur Verbesserung des Anwenderprozesses durch Fehlerbeseitigung, Leistungsverbesserung, Einsparung von Betriebsmitteln durch einen optimierten Betrieb oder Funktionserweiterung. Hierzu wird üblicherweise durch geeignete Mittel die Software auf diesen Mikrocontrollern ausgetauscht. Typischerweise muss die Komponente dafür in einen Zustand versetzt werden, in dem sie ihre Funktion nicht ausführen kann. Beispielsweise muss eine Vakuumpumpe für die Softwareaktualisierung ihres Antriebsmoduls zum Stillstand gebracht oder sogar ganz abgeschaltet werden, da der Softwarecode während seiner Aktualisierung nicht ausgeführt werden kann.

Eine Aktualisierung des Softwarecodes führt in einem herkömmlichen Vakuumsystem somit zu einer Unterbrechung des Anwenderprozesses und damit zu Einbußen in der Wirtschaftlichkeit. Ferner müssen Softwareaktualisierungen in geplanten Wartungsintervallen durchgeführt werden, wodurch die Flexibilität des Systems reduziert wird. Im Notfall kann eine dringende Softwareaktualisierung auch zu einer ungeplanten Unterbrechung des Anwenderprozesses und somit zu einem vorübergehenden Ausfall des Systems führen.

Eine Aufgabe der Erfindung ist es somit, ein Vakuumsystem bereitzustellen, das sich durch eine höhere Wirtschaftlichkeit auszeichnet.

Diese Aufgabe wird durch ein Vakuumsystem nach Anspruch 1 gelöst.

Das erfindungsgemäße Vakuumsystem weist eine erste Komponente und eine zweite Komponente auf, die jeweils einen computerausführbaren Softwarecode zum Betreiben des Vakuumsystems umfassen. Das Vakuumsystem ist dazu ausgebildet, wahlweise durch die erste Komponente und/oder durch die zweite Komponente betrieben zu werden. Ferner ist das Vakuumsystem dazu ausgebildet, im Falle einer Aktualisierung des Softwarecodes der ersten Komponente zumindest teilweise durch die zweite Komponente weiterbetrieben zu werden.

Grundsätzlich kann das Vakuumsystem somit unter Verwendung der ersten Komponente und/oder der zweiten Komponente betrieben werden, insbesondere während eines Normalbetriebs, in dem keine Softwareaktualisierung durchgeführt wird. Sobald eine Aktualisierung des Softwarecodes der ersten Komponente durchgeführt werden soll, kann das Vakuumsystem in einen Aktualisierungsbetrieb wechseln, in dem das Vakuumsystem zumindest teilweise durch die zweite Komponente betrieben wird. Auch wenn die erste Komponente während der Aktualisierung des Softwarecodes der ersten Komponente nicht ansprechbar ist und der Betrieb des Vakuumsystems basierend auf der ersten Komponente nicht oder nur teilweise möglich ist, kann der Betrieb des Vakuumsystems während einer Aktualisierung des Softwarecodes der ersten Komponente also trotzdem durch die zweite Komponente weitergeführt werden. Ungeplante Unterbrechungen des Betriebs des Vakuumsystems und damit einhergehende potentielle Effizienzeinbußen können somit verhindert werden. Ein Betriebsausfall des Vakuumsystems für einen längeren Zeitraum wird somit verhindert. Ferner können Softwareaktualisierungen zu beliebigen Zeitpunkten durchgeführt werden, da aufgrund der Redundanz der Komponenten des Vakuumsystems der Betrieb des Vakuumsystems jederzeit sichergestellt ist. Durch den erfindungsgemäßen Aufbau des Vakuumsystems wird ferner die Ausfallsicherheit des Vakuumsystems im Falle von defekten Komponenten erhöht, da beispielsweise der Ausfall der ersten Komponente durch die zweite Komponente kompensiert wird.

Das Vakuumsystem kann jedes System umfassen, welches unter Verwendung wenigstens einer Vakuumkomponente ein Vakuum erzeugt, aufrechterhält oder misst. Die erste und zweite Komponente können dabei einen beliebigen Bestandteil des Vakuumsystem darstellen, der für den Betrieb des Vakuumsystems relevant oder notwendig ist. Somit können die erste und zweite Komponente Vakuumkomponenten wie beispielsweise Vakuumpumpen oder Vakuummessgeräte, Bauteile einer Vakuumkomponente, Steuerplatinen wie beispielsweise Mikrocontroller, Speichermedien oder den Softwarecode selbst, beispielsweise in Form von Softwaremodulen, umfassen. Die erste und zweite Komponente sind insbesondere funktionsgleiche Komponenten, d. h. Komponenten, welche die gleiche Funktion ausführen. Das Vakuumsystem umfasst somit redundante Komponenten, wodurch ein durchgehender Betrieb des Vakuumsystems sichergestellt werden kann. Grundsätzlich ist es auch möglich, dass die zweite Komponente ein Teil der ersten Komponente ist oder umgekehrt.

Wenn der Softwarecode der ersten Komponente aktualisiert wird, bedeutet dies grundsätzlich, dass die erste Komponente für den Betrieb des Vakuumsystems während der Aktualisierung nicht oder nur teilweise zur Verfügung steht. In diesem Fall übernimmt die zweite Komponente den Betrieb des Vakuumsystems basierend auf dem Softwarecode der zweiten Komponente. Insbesondere wird während der Aktualisierung des Softwarecodes der ersten Komponente der Softwarecode der ersten Komponente zumindest teilweise verändert.

Die Aktualisierung kann drahtgebunden oder drahtlos erfolgen, d. h. die der Aktualisierung zugehörigen Daten werden über eine physische Leitung oder drahtlos, beispielsweise per Bluetooth, WLAN, ZigBee oder NFC, an das Vakuumsystem übertragen. Vor der Durchführung der Aktualisierung des Softwarecodes der ersten Komponente kann ein aktueller Stand bzw. eine aktuelle Version des Softwarecodes der ersten Komponente abgefragt werden, um festzustellen, ob eine Aktualisierung überhaupt notwendig ist. Jede Aktualisierung umfasst beispielsweise eine Versionsnummer, welche die Version des Softwarecodes darstellt. Die aktuelle Versionsnummer des Softwarecodes der ersten Komponente kann beispielsweise mit der Versionsnummer der Aktualisierung verglichen werden, um festzustellen, ob die Aktualisierung notwendig ist bzw. um eine Rücksetzung des Softwarecodes der ersten Komponente auf eine vorherige Version zu verhindern. Die Aktualisierung des Softwarecodes kann automatisch erfolgen, sobald eine entsprechende Aktualisierung bzw. eine Aktualisierungsanfrage verfügbar ist. Alternativ kann die Aktualisierung manuell durch einen Benutzer angestoßen bzw. gestartet werden.

Weiterbildungen der Erfindung sind der Beschreibung, den Unteransprüchen sowie den Zeichnungen zu entnehmen.

Gemäß einer ersten Ausführungsform wird das Vakuumsystem im Falle einer Aktualisierung des Softwarecodes der ersten Komponente unterbrechungsfrei weiterbetrieben. Um einen unterbrechungsfreien Betrieb des Vakuumsystems bereitzustellen, kann das Vakuumsystem beispielsweise bereits ab einem vordefinierten Zeitraum vor Beginn der Aktualisierung, insbesondere nur noch, unter Verwendung der zweiten Komponente betrieben werden. Während der Aktualisierung erfolgt der Betrieb des Vakuumsystems unabhängig von der ersten Komponente. Insbesondere kann das Vakuumsystem während der Aktualisierung uneingeschränkt funktionsfähig bleiben, d. h. die Leistung des Vakuumsystems wird während einer Aktualisierung nicht reduziert. Mit anderen Worten ist der Aktualisierungsvorgang für einen außenstehenden Beobachter idealerweise nicht wahrnehmbar. Alternativ kann das Vakuumsystem während der Aktualisierung auch nur teilweise funktionsfähig sein, beispielsweise können nur einzelne Funktionen des Vakuumsystems, z. B. Grundfunktionen, ausgeführt werden.

Gemäß einer weiteren Ausführungsform stimmt der Softwarecode der zweiten Komponente zumindest teilweise mit dem vor der Aktualisierung vorliegenden Softwarecode der ersten Komponente überein. Basierend auf dem übereinstimmenden Teil des Softwarecodes der zweiten Komponente kann der Betrieb des Vakuumsystems weitergeführt werden. Mit Übereinstimmen ist hierbei nicht gemeint, dass der Softwarecode der zweiten Komponente mit dem Softwarecode der ersten Komponente unbedingt identisch ist, sondern vielmehr dass der übereinstimmende Teil des Softwarecodes der ersten Komponente und der zweiten Komponente der gleichen Funktion im Vakuumsystem zugeordnet werden kann. Ferner kann der übereinstimmende Teil des Softwarecodes der zweiten Komponente einem Normalbetrieb des Vakuumsystems zugeordnet sein. Mit anderen Worten kann das Vakuumsystem eine erste Softwarekomponente und eine zweite gleichartige Softwarekomponente umfassen, wobei bei einer Aktualisierung der ersten Softwarekomponente die zweite Softwarekomponente den Betrieb des Vakuumsystems sicherstellt.

Gemäß einer weiteren Ausführungsform ist der Softwarecode der ersten Komponente aus mehreren Modulen aufgebaut und im Falle einer Aktualisierung wird nur eines der Module des Softwarecodes der ersten Komponente aktualisiert. Dabei kann jedes einzelne Modul einer bestimmten Funktion des Vakuumsystems zugeordnet sein. Während der Aktualisierung eines Moduls wird das Vakuumsystem durch die verbleibenden Module, die gerade nicht aktualisiert werden, in einem eingeschränkten Modus weiterbetrieben. Die weiterarbeitenden Module bilden in diesem Fall gewissermaßen also den Softwarecode der zweiten Komponente.

Gemäß einer weiteren Ausführungsform ist der Softwarecode der ersten Komponente auf einem ersten Speicher und der Softwarecode der zweiten Komponente auf einem zweiten Speicher gespeichert. Insbesondere umfasst die erste Komponente den ersten Speicher und die zweite Komponente den zweiten Speicher. Der Softwarecode der ersten und zweiten Komponente kann auf separaten Speichermedien wie beispielsweise USB-Sticks, Speicherkarten, Festplatten, Halbleiterspeichern, Flash- oder RAM-Speicher gespeichert werden. Vorzugsweise ist während der Aktualisierung des auf dem ersten Speicher gespeicherten Softwarecodes der zweite Speicher zugänglich bzw. abrufbar. Somit kann der Betrieb des Vakuumsystems basierend auf dem auf dem zweiten Speicher gespeicherten Softwarecode weitergeführt werden. Der erste und zweite Speicher können ferner auf derselben Steuerplatine oder alternativ auf unterschiedlichen Steuerplatinen und/oder unterschiedlichen Bauteilen des Vakuumsystems angeordnet sein.

Gemäß einer weiteren Ausführungsform wird vor einer Aktualisierung des Softwarecodes der ersten Komponente dieser zumindest teilweise in die zweite Komponente ausgelagert und betreibt im Falle einer Aktualisierung des Softwarecodes der ersten Komponente die zweite Komponente das Vakuumsystem basierend auf dem ausgelagerten Teil des Softwarecodes weiter. Der ausgelagerte Teil des Softwarecodes stellt beispielsweise den Betrieb des Vakuumsystems sicher, während ein nicht-ausgelagerter Teil des Softwarecodes der ersten Komponente, der beispielsweise für Kommunikationsfunktionen zuständig ist, aktualisiert wird und somit vorübergehend nicht zur Verfügung steht. Die erste Komponente kann ferner einen Flash-Speicher umfassen und die zweite Komponente kann einen RAM-Speicher umfassen. Vor der Aktualisierung des Softwarecodes kann der auf dem Flash-Speicher gespeicherte Softwarecode der ersten Komponente zumindest teilweise in den RAM-Speicher ausgelagert werden.

Besonders vorteilhaft bei dieser Ausführungsform ist, dass der verfügbare Speicher effizient ausgenutzt wird, da nur bei Bedarf zusätzlicher Speicher belegt wird. Beispielsweise wird nur dann, wenn eine Aktualisierung ansteht, Speicherplatz belegt, um eine zusätzliche Softwareinstanz zu schaffen, die den Betrieb des Vakuumsystems sicherstellt. Anders ausgedrückt, wird der Softwarecode der zweiten Komponente immer nur dann erzeugt, wenn eine Aktualisierung bevorsteht. Nach einer erfolgten Aktualisierung kann der zugehörige Speicherplatz wieder freigegeben werden, indem der ausgelagerte Teil des Softwarecodes gelöscht wird.

Gemäß einer weiteren Ausführungsform wechselt das Vakuumsystem in einen sicheren Betriebszustand oder wird das Vakuumsystem basierend auf einer vorherigen Softwarecodeversion betrieben, wenn die Aktualisierung des Softwarecodes der ersten Komponente fehlgeschlagen ist. Dies ist insbesondere dann von Vorteil, wenn das Vakuumsystem im Normalbetrieb ausschließlich durch die erste Komponente betrieben wird. Eine fehlgeschlagene Aktualisierung kann beispielsweise durch ein Fehlersignal angezeigt werden. Das Fehlersignal kann durch unterschiedliche Auslöser erzeugt werden. Beispielsweise kann das Fehlersignal erzeugt werden, wenn das Vakuumsystem länger als für eine vordefinierte Zeitdauer basierend auf der zweiten Komponente betrieben wird. Eine Überschreitung der vordefinierten Zeitdauer kann beispielsweise bedeuten, dass die Aktualisierung des Softwarecodes der ersten Komponente fehlgeschlagen ist. Die vordefinierte Zeitdauer kann beispielsweise basierend auf der Größe des zu aktualisierenden Softwarecodes oder basierend auf einem Typ der Komponente festgelegt werden.

Insbesondere kann die vordefinierte Zeitdauer für jede Aktualisierung unterschiedlich sein. Bei einer festgestellten fehlgeschlagenen Aktualisierung kann sich das Vakuumsystem abschalten, in einen Zustand mit reduzierter Funktionalität wechseln, ein akustisches und/oder visuelles Fehlersignal ausgeben oder eine Kombination der vorstehenden Aktionen ausführen. Alternativ kann das Vakuumsystem in einem solchen Fall basierend auf einer vorherigen Softwarecodeversion weiterbetrieben werden. Beispielsweise können in der Vergangenheit erfolgreich durchgeführte Softwarecodeaktualisierungen in einem unabhängigen Backup-Speicher gespeichert werden, wobei im Fall einer fehlgeschlagenen Softwareaktualisierung der Betrieb des Vakuumsystems basierend auf der letzten erfolgreich aktualisierten Softwarecodeversion erfolgt. Hierzu kann beispielsweise die erste Komponente mit der zuletzt erfolgreich ausführbaren Softwarecodeversion überschrieben werden, während die zweite Komponente während der Überschreibung den Betrieb der Vakuumsystems weiterführt.

Gemäß einer weiteren Ausführungsform sind die erste und zweite Komponente des Vakuumsystems zur Ausführung einer gleichen Teilfunktion des Vakuumsystems vorgesehen. Mit anderen Worten werden beispielsweise gleiche Komponenten redundant verwendet, um einen unterbrechungsfreien Betrieb des Vakuumsystems bereitzustellen. Die Teilfunktion umfasst beispielsweise eine oder mehrere der folgenden Funktionen: Vakuumerzeugung, Prozesssteuerung, Antrieb, Kommunikation und Datenspeicherung. Beispielsweise umfassen die erste und zweite Komponente Vakuumpumpen, Antriebsgeräte, Messgeräte oder Microcontroller mit gleicher Funktionalität.

Gemäß einer weiteren Ausführungsform wird die Teilfunktion im Normalbetrieb, d. h. einem Zustand, in dem keine Aktualisierung durchgeführt wird, durch die erste Komponente und/oder die zweite Komponente ausgeführt und im Falle einer Aktualisierung des Softwarecodes der ersten Komponente nur durch die zweite Komponente ausgeführt. So kann das Vakuumsystem im Normalbetrieb unter Verwendung beider Komponenten betrieben werden. Das Vakuumsystem kann beispielsweise zwei Vakuumpumpen umfassen, die gemeinsam mit jeweils reduzierter Leistung betrieben werden, wobei während der Softwareaktualisierung der einen Vakuumpumpe ausschließlich die andere Vakuumpumpe die Vakuumerzeugung ausführt. Dabei kann die zweite Vakuumpumpe während der Softwareaktualisierung vorübergehend mit erhöhter Leistung betrieben werden, um den Ausfall der ersten Vakuumpumpe zu kompensieren. Alternativ kann das Vakuumsystem im Normalbetrieb ausschließlich durch die erste Vakuumpumpe und während der Softwareaktualisierung ausschließlich durch die zweite Vakuumpumpe ausgeführt werden.

Gemäß einer weiteren Ausführungsform umfassen die erste Komponente und die zweite Komponente jeweils eine Hardwareeinrichtung, welche zumindest ein Rechenmodul zum Ausführen von computerausführbarem Softwarecode aufweist. Beispielsweise können die erste Komponente und die zweite Komponente jeweils eine Vakuumkomponente, ein Bauteil einer Vakuumkomponente, eine Steuerplatine wie beispielsweise einen Mikrocontroller oder jede andere geeignete Hardwareeinrichtung umfassen. Ferner kann das Rechenmodul eine Steuerplatine wie beispielsweise einen Mikrocontroller umfassen.

Gemäß einer weiteren Ausführungsform ist im Normalbetrieb die erste Komponente mit dem Vakuumsystem verbunden, wohingegen zur Aktualisierung des Softwarecodes der ersten Komponente die Verbindung zwischen der ersten Komponente und dem Vakuumsystem getrennt und eine Verbindung zwischen der zweiten Komponente und dem Vakuumsystem hergestellt wird. Die zweite Komponente wird somit nur wahlweise an das Vakuumsystem angeschlossen, wenn die Aktualisierung des Softwarecodes der ersten Komponente durchgeführt wird. Beispielsweise kann die zweite Komponente eine Ersatzvakuumkomponente, ein Ersatzbauteil, ein Ersatzmikrocontroller, ein Ersatzspeicher wie beispielsweise ein USB-Speicher oder SD-Karten-Speicher oder eine andere geeignete Komponente sein, die einen Softwarecode zum Betreiben des Vakuumsystems umfasst.

Zur Aktualisierung des Softwarecodes ersten Komponente kann die erste Komponente beispielsweise mit einem Aktualisierungsmodul, beispielsweise einem Computer, verbunden oder an diesen angeschlossen werden, um den Softwarecode der ersten Komponente zu aktualisieren. Beispielsweise wird ein Speicher der ersten Komponente, auf dem der Softwarecode der ersten Komponente gespeichert ist, mit einem aktualisierten Softwarecode überschrieben. Sobald der Aktualisierungsvorgang beendet ist, kann die Verbindung zwischen dem Vakuumsystem und der ersten Komponente erneut hergestellt werden und die Verbindung zwischen dem Vakuumsystem und der zweiten Komponente getrennt werden. Zusätzlich kann der Softwarecode der zweiten Komponente nach einer erfolgreichen Aktualisierung des Softwarecodes der ersten Komponente entsprechend aktualisiert werden.

Gemäß einer weiteren Ausführungsform ist die Hardwareeinrichtung und/oder das Rechenmodul als Plug-and-Play-Modul ausgebildet. Beispielsweise kann die Hardwareeinrichtung und/oder das Rechenmodul in das Vakuumsystem einsteckbar oder an das Vakuumsystem anschließbar sein. Die Hardwareeinrichtung und/oder das Rechenmodul sind vorzugsweise ohne die Notwendigkeit einer Installierung oder Einstellung funktionsfähig. Insbesondere sind an dem Vakuumsystem Anschlüsse zur Aufnahme von Steckern oder Steckerkarten der Hardwareeinrichtung und/oder des Rechenmoduls vorhanden, wobei die Anschlüsse des Vakuumsystems komplementär zu den Steckern bzw. Steckerkarten der Hardwareeinrichtung und/oder des Rechenmoduls aufgebaut sind. Somit kann ein fehlerhaftes Anschließen einer Hardwareeinrichtung ausgeschlossen werden. Dadurch, dass die Hardwareeinrichtung und/oder das Rechenmodul als Plug-and-Play-Modul ausgebildet ist, kann eine jeweilige Komponente auf einfache Weise an das Vakuumsystem angeschlossen werden und eine eventuelle Unterbrechung des Betriebs während einer Aktualisierung kurz gehalten werden.

Gemäß einer weiteren Ausführungsform wird das Vakuumsystem nach einer erfolgreichen Aktualisierung des Softwarecodes der ersten Komponente wieder durch die erste Komponente betrieben und der Softwarecode der zweiten Komponente aktualisiert. Mit anderen Worten übernimmt die erste Komponente nach einer erfolgreichen Aktualisierung wieder den Betrieb des Vakuumsystems. Um bei einer nächsten Aktualisierung des Softwarecodes der ersten Komponente den Betrieb des Vakuumsystems basierend auf einer aktuellen Softwarecodeversion zu gewährleisten, wird nach einer erfolgreichen Aktualisierung des Softwarecodes der ersten Komponente auch der Softwarecode der zweiten Komponente entsprechend aktualisiert, insbesondere wenn der Softwarecode der zweiten Komponente dem Softwarecode der ersten Komponente vor dessen Aktualisierung entspricht.

Alternativ kann der Softwarecode der zweiten Komponente bereits eine aktualisierte Softwarecodeversion umfassen. Beispielsweise kann der Softwarecode der zweiten Komponente bereits vor der Aktualisierung des Softwarecodes der ersten Komponente aktualisiert worden sein, sodass im Falle einer Aktualisierung des Softwarecodes der ersten Komponente das Vakuumsystem durch die zweite Komponente bereits mit einer aktualisierten Softwarecodeversion betrieben wird.

Gemäß einer weiteren Ausführungsform wird vor und/oder nach einer Aktualisierung des Softwarecodes der ersten Komponente der Softwarecode der ersten Komponente als Backup-Version in einem Backup-Speicher gespeichert. Somit kann sichergestellt werden, dass die zuletzt ausführbare Softwarecodeversion im Backup-Speicher hinterlegt ist und im Falle einer fehlgeschlagenen Aktualisierung des Softwarecodes eine ausführbare Softwarecodeversion zur Verfügung steht, um das Vakuumsystem zu betreiben. In dem Backup-Speicher können ferner eine Vielzahl von Softwarecodeversionen gespeichert sein. Beispielsweise kann es zu Testzwecken nützlich sein, auf ältere Softwarecodeversionen zurückzugreifen. Die in dem Backup-Speicher gespeicherten Softwarecodeversionen können zusätzlich mit einem Zeitstempel versehen werden, um die zeitliche Einordnung einer Softwarecodeversion zu vereinfachen.

Gemäß einer weiteren Ausführungsform umfasst ein erster Mikrocontroller einer Vakuumkomponente des Vakuumsystems den Softwarecode für wenigstens einen weiteren Mikrocontroller derselben Vakuumkomponente. Zusätzlich oder alternativ kann auch ein erster Mikrocontroller einer ersten Vakuumkomponente des Vakuumsystems den Softwarecode für einen Mikrocontroller wenigstens einer weiteren Vakuumkomponente des Vakuumsystems umfassen. Eine Aktualisierung des jeweiligen weiteren Mikrocontrollers kann auf diese Weise durch den ersten Mikrocontroller erfolgen und somit ohne externe Kommunikation und insbesondere zu einer geeigneten Zeit durchgeführt werden. Beispielsweise kann eine Aktualisierung eines weiteren Mikrocontrollers durch den ersten Mikrocontroller dann erfolgen, wenn sich das Vakuumsystem gerade in einem inaktiven Modus befindet.

Ein weiterer Aspekt der Erfindung betrifft ein Verfahren zum Betreiben eines Vakuumsystem, bei dem das Vakuumsystem wahlweise durch die erste Komponente und/oder durch die zweite Komponente betrieben wird, die jeweils einen computerausführbaren Softwarecode zum Betreiben des Vakuumsystems umfassen, und das Vakuumsystem im Falle einer Aktualisierung des Softwarecodes der ersten Komponente zumindest teilweise durch die zweite Komponente weiterbetrieben wird. Es versteht sich, dass die voranstehend beschriebenen Vorteile des erfindungsgemäßen Vakuumsystems für das Verfahren entsprechend gelten.

Nachfolgend wird die Erfindung anhand möglicher Ausführungsformen rein beispielhaft unter Bezugnahme auf die beigefügte Zeichnung dargestellt. Es zeigen, in schematischer Form:
- Fig. 1: ein Vakuumsystem;
- Fig. 2: ein Vakuumsystem mit einer angeschlossenen ersten Komponente und einer nicht angeschlossenen zweiten Komponente;
- Fig. 3: ein Vakuumsystem mit einer eingesteckten ersten Steuerplatine und einer nicht eingesteckten zweiten Steuerplatine;
- Fig. 4: ein Vakuumsystem mit einer ersten und zweiten Steuerplatine;
- Fig. 5: ein Vakuumsystem mit einem Flash-Speicher und einem RAM-Speicher;
- Fig. 6: ein Ablaufdiagramm für eine Aktualisierung von Software eines Vakuumsystems.

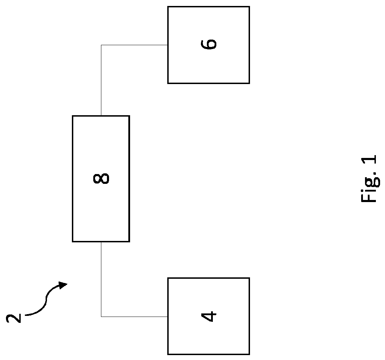

Fig. 1 zeigt ein Vakuumsystem 2, das eine erste Komponente und eine zweite Komponente umfasst. Im vorliegenden Fall handelt es sich bei der ersten Komponente um eine erste Vakuumpumpe 4 und bei der zweiten Komponente um eine zweite Vakuumpumpe 6. Grundsätzlich können die erste und zweite Komponente auch andere Bauteile eines Vakuumsystems umfassen, beispielsweise ein Vakuummessgerät, ein Antriebsgerät, eine Steuerplatine, und/oder einen Softwarecode. Die erste Vakuumpumpe 4 und die zweite Vakuumpumpe 6 stehen jeweils in Verbindung mit einer Zentralsteuereinheit 8, welche den Betrieb der Vakuumpumpen 4, 6 koordiniert. Die Vakuumpumpen 4, 6 umfassen jeweils eine nicht gezeigte Steuerplatine und einen nicht gezeigten Antriebsmotor, welcher durch die jeweilige Steuerplatine gesteuert wird. Die Steuerplatine umfasst hierzu einen Speicher, auf dem ein Softwarecode der jeweiligen Vakuumpumpe 4, 6 gespeichert ist, und einen Prozessor, der den Softwarecode ausführt. In einem Normalbetrieb des Vakuumsystems 2 werden die Vakuumpumpen 4, 6 gleichzeitig betrieben und zwar mit jeweils 50 Prozent ihrer Maximalleistung.

Soll der Softwarecode der ersten Vakuumpumpe 4 aktualisiert werden, übermittelt die Zentralsteuereinheit 8 ein Aktualisierungssignal an die erste und zweite Vakuumpumpe 4, 6. In Reaktion auf das Empfangen des Aktualisierungssignals von der Zentralsteuereinheit 8 wechselt die erste Vakuumpumpe 4 in einen Vorbereitungsmodus, in dem die erste Vakuumpumpe 4 heruntergefahren wird, bis sie inaktiv ist und auf den Beginn der Aktualisierung des Softwarecodes der ersten Vakuumpumpe 4 wartet. Die zweite Vakuumpumpe 6 hingegen fährt ihre Aktivität in Reaktion auf das Empfangen des Aktualisierungssignals hoch und betreibt das Vakuumsystem 2 mit 100 Prozent ihrer Maximalleistung. Die zweite Vakuumpumpe 6 kompensiert somit die Inaktivität der ersten Vakuumpumpe 4. Nun kann die Aktualisierung des Softwarecodes der ersten Vakuumpumpe 4 gestartet werden. Beispielsweise wird der gesamte Softwarecode der ersten Vakuumpumpe 4 oder nur ein Teil des Softwarecodes der ersten Vakuumpumpe 4 aktualisiert.

Sobald der Aktualisierungsvorgang abgeschlossen ist, sendet die erste Vakuumpumpe 4, genauer gesagt die Steuerplatine der ersten Vakuumpumpe 4, ein Bestätigungssignal an die Zentralsteuereinheit 8, welches anzeigt, dass die Aktualisierung erfolgreich abschlossen wurde. Sobald die Zentralsteuereinheit 8 von der ersten Vakuumpumpe 4 das Bestätigungssignal empfängt, übermittelt die Zentralsteuereinheit 8 ein entsprechendes Bestätigungssignal an die zweite Vakuumpumpe 6. Zusätzlich oder alternativ kann die erste Vakuumpumpe 4 ein Bestätigungssignal direkt an die zweite Vakuumpumpe 6 senden. In Reaktion auf das Empfangen des Bestätigungssignals durch die zweite Vakuumpumpe 6 wechselt das Vakuumsystem 2 zurück in seinen Normalbetrieb. Hierzu fährt die erste Vakuumpumpe 4 ihren Betrieb wieder hoch, bis sie mit 50 Prozent ihrer Maximalleistung arbeitet. Parallel fährt die zweite Vakuumpumpe 6 ihren Betrieb von 100 Prozent ihrer Maximalleistung auf 50 Prozent ihrer Maximalleistung herunter.

Nach einer erfolgreichen Aktualisierung des Softwarecodes der ersten Vakuumpumpe 4 kann auch der Softwarecode der zweiten Vakuumpumpe 6 aktualisiert werden. Hierzu kann die erste Vakuumpumpe 4 nach einer erfolgreichen Aktualisierung ihres Softwarecodes das Vakuumsystem 2 mit 100 Prozent ihrer Maximalleistung betreiben, während die zweite Vakuumpumpe 6 in einen inaktiven Modus wechselt, in dem der Softwarecode der zweiten Vakuumpumpe 6 aktualisiert werden kann. Nach einer erfolgreichen Aktualisierung des Softwarecodes der zweiten Vakuumpumpe 6 können die erste und zweite Vakuumpumpe 4, 6 in den Normalbetrieb zurückwechseln, in dem die erste und zweite Vakuumpumpe 4, 6 mit jeweils 50 Prozent ihrer Maximalleistung arbeiten.

Wenn die Aktualisierung des Softwarecodes der ersten Vakuumpumpe 4 und/oder der zweiten Vakuumpumpe 6 fehlschlägt oder die Aktualisierung länger als eine vordefinierte Zeitdauer dauert, wird ein Fehlersignal an die Zentralsteuereinheit 8 und/oder an die jeweils andere Vakuumpumpe gesendet. In Reaktion auf das Fehlersignal wird das Vakuumsystem 2 in einen sicheren Betriebszustand versetzt oder nur noch basierend auf der jeweils anderen Vakuumpumpe betrieben. Zusätzlich oder alternativ ist es auch möglich, dass die zu aktualisierende Vakuumpumpe 4, 6 basierend auf dem zuletzt erfolgreich ausgeführten Softwarecode betrieben wird, indem der Softwarecode der entsprechenden Vakuumpumpe mit dem zuletzt erfolgreich ausgeführten Softwarecode überschrieben wird. Beispielsweise wird nach einer erfolgreichen Aktualisierung des Softwarecodes eine entsprechende Softwarecodeversion in einem Backup-Speicher gespeichert, auf den in einem solchen Fall zugegriffen werden kann. Nach einer fehlgeschlagenen Aktualisierung wird dann der zu aktualisierende Softwarecode mithilfe einer Softwarecodeversion des Backup-Speichers überschrieben.

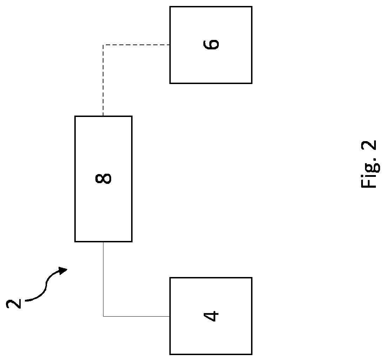

Fig. 2 zeigt ein Vakuumsystem 2 mit einer ersten Vakuumpumpe 4 und einer zweiten Vakuumpumpe 6, wobei im Normalbetrieb nur die erste Vakuumpumpe 4 mit einer Zentralsteuereinheit 8 verbunden ist. Sobald der Softwarecode der ersten Vakuumpumpe 4 aktualisiert werden soll, wird die Verbindung zwischen der ersten Vakuumpumpe 4 und der Zentralsteuereinheit 8 getrennt und die zweite Vakuumpumpe 6 mit der Zentralsteuereinheit 8 verbunden, damit die zweite Vakuumpumpe 6 während der Softwareaktualisierung die Funktion der ersten Vakuumpumpe 4 übernehmen kann. Sobald die Aktualisierung des Softwarecodes der ersten Vakuumpumpe 4 abschlossen ist, wird wieder die erste Vakuumpumpe 4 mit der Zentralsteuereinheit 8 verbunden und die zweite Vakuumpumpe 6 von der Zentralsteuereinheit 8 getrennt. Anschließend kann auch der Softwarecode der zweiten Vakuumpumpe 6 aktualisiert werden. Es versteht sich, dass es grundsätzlich auch möglich ist, zuerst den Softwarecode der zweiten Vakuumpumpe 6 zu aktualisieren und erst danach den der ersten Vakuumpumpe 4.

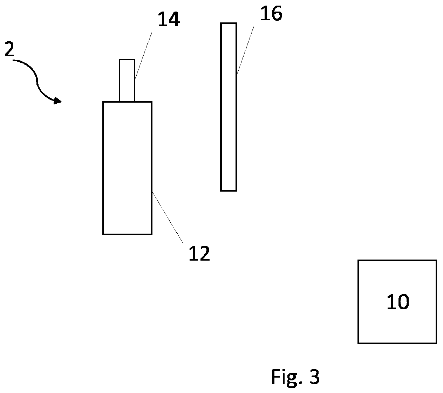

Fig. 3 veranschaulicht ein Vakuumsystem 2 mit einem Aktuator 10, beispielsweise einem Antriebsgerät, der in Verbindung mit einem Einsteckgehäuse 12 steht, in das eine Steuerplatine 14,16 eingesteckt werden kann. In Fig. 3 ist eine erste Steuerplatine 14 in das Einsteckgehäuse 12 eingesteckt und steuert den Aktuator 10. Wenn der auf der ersten Steuerplatine 14 ausführbare Softwarecode aktualisiert werden soll, wird die erste Steuerplatine 14 aus dem Einsteckgehäuse 12 entnommen und durch die zweite Steuerplatine 16 ersetzt, die in das Einsteckgehäuse 12 gesteckt wird. Während die erste Steuerplatine 14, genauer gesagt der Softwarecode der ersten Steuerplatine 14, aktualisiert wird, steuert die zweite Steuerplatine 16 den Aktuator 10. Sobald die Aktualisierung der ersten Steuerplatine 14 abgeschlossen ist, wird die zweite Steuerplatine 16 abgesteckt und die erste Steuerplatine 14 wieder in das Einsteckgehäuse 12 eingesteckt, sodass wieder die erste Steuerplatine 14 den Aktuator 10 steuert. Anschließend kann Softwarecode der zweiten Steuerplatine 16 aktualisiert werden. Es versteht sich, dass der Softwarecode der zweiten Steuerplatine 16 aber auch bereits vor dem der ersten Steuerplatine 14 aktualisiert worden sein kann, in welchem Fall die zweite Steuerplatine 16 nach der Aktualisierung der ersten Steuerplatine 14 in dem Einsteckgehäuse 12 eingesteckt bleiben kann.

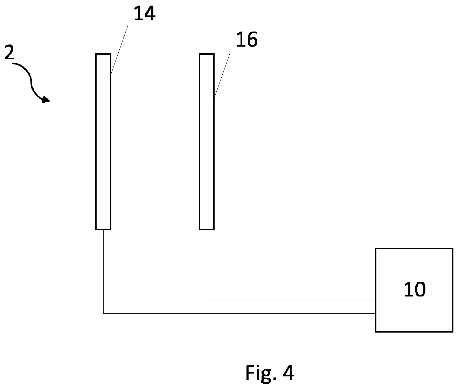

In Fig. 4 ist ein Vakuumsystem 2 mit einem Aktuator 10 gezeigt, der - anders als in Fig. 3 - dauerhaft mit einer ersten Steuerplatine 14 und einer zweiten Steuerplatine 16 verbunden ist. Das Vakuumsystem 2 von Fig. 4 kann sowohl unter Verwendung der ersten Steuerplatine 14 als auch unter Verwendung der zweiten Steuerplatine 16 betrieben werden, so dass für eine Softwareaktualisierung der einen Steuerplatine 14, 16 lediglich auf die jeweils andere Steuerplatine 16, 14 umgeschaltet werden muss, und zwar ohne dass der Betrieb des Vakuumsystems 2 hierfür unterbrochen werden muss.

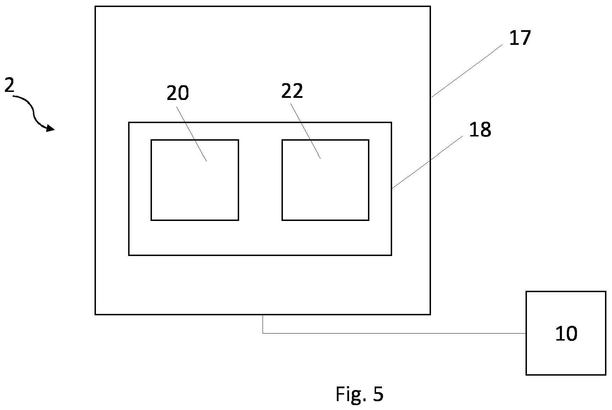

Fig. 5 zeigt ebenfalls ein Vakuumsystem 2 mit einem Aktuator 10, der in Verbindung mit einer Steuerplatine 17 steht. Die Steuerplatine 17 umfasst einen Speicher 18, auf dem computerausführbarer Softwarecode gespeichert ist. Ferner umfasst der Speicher 18 einen Flash-Speicher 20 und einen RAM-Speicher 22. Der computerausführbare Softwarecode ist im Normalbetrieb des Vakuumsystems 2 in dem Flash-Speicher 20 gespeichert. Sobald der Softwarecode aktualisiert werden soll, wird der Softwarecode in den RAM-Speicher 22 ausgelagert. Insbesondere wird derjenige Teil des Softwarecodes in den RAM-Speicher 22 ausgelagert, der für einen Normalbetrieb des Vakuumsystems 2 unbedingt notwendig ist. Während der Aktualisierung kann somit der Softwarecode auf dem Flash-Speicher 20 aktualisiert werden, während der Betrieb des Vakuumsystems 2 mittels des in den RAM-Speicher 22 ausgelagerten Softwarecodes weitergeführt wird. Wenn die Aktualisierung des Softwarecodes in dem Flash-Speicher 20 erfolgreich abgeschlossen ist, wird der in den RAM-Speicher 22 ausgelagerte Teil des Softwarecodes gelöscht, sodass der entsprechend belegte Speicherplatz auf dem RAM-Speicher 22 freigegeben wird.

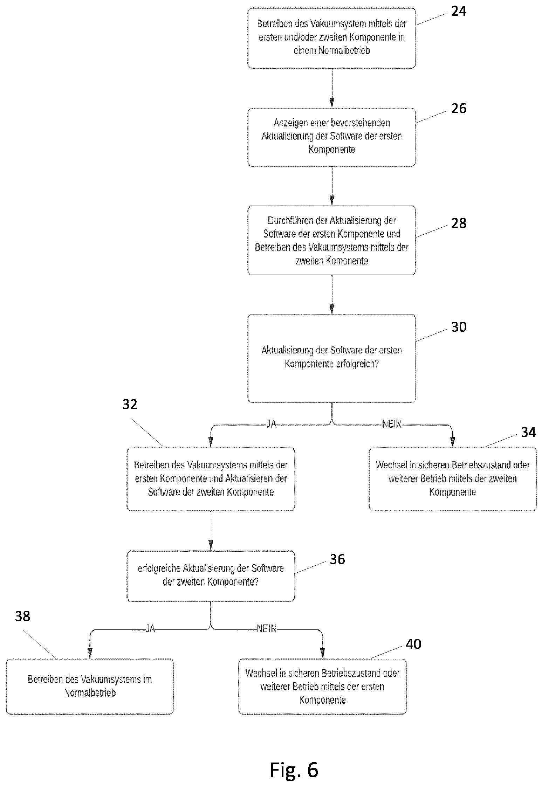

Fig. 6 veranschaulicht allgemein ein Ablaufdiagramm für eine Aktualisierung von Software des Vakuumsystems 2. In Schritt 24 wird das Vakuumsystem 2 mittels der ersten und/oder der zweiten Komponente, z.B. einer ersten und/oder zweiten Vakuumpumpe 4, 6 oder einer ersten und/oder zweiten Steuerplatine 14, 16, in einem Normalbetrieb betrieben, d. h. in einem Zustand, in dem kein Aktualisierungsvorgang abläuft.

In Schritt 26 wird beispielsweise durch ein Aktualisierungssignal eine bevorstehende Aktualisierung der Software der ersten Komponente angezeigt. Die erste und zweite Komponente gehen in Reaktion auf das Aktualisierungssignal in einen Zustand über, in dem eine Aktualisierung der Software der ersten Komponente gestartet werden kann. Beispielsweise geht die erste Komponente in einen inaktiven Zustand über, in dem die erste Komponente nicht mehr zum Betrieb des Vakuumsystems 2 beiträgt, während sich die zweite Komponente in einen aktiven Zustand übergeht und den Betrieb des Vakuumsystems 2 allein übernimmt.

In Schritt 28 erfolgt die Aktualisierung der Software der ersten Komponente, während das Vakuumsystem 2 mittels der zweiten Komponente betrieben wird.

In Schritt 30 wird geprüft, ob die Aktualisierung der Software der ersten Komponente erfolgreich war. Zusätzlich kann geprüft werden, ob der Aktualisierungsvorgang länger als eine vordefinierte Zeitdauer andauert, wobei bei einer positiven Feststellung die Aktualisierung als fehlgeschlagen gilt. Wenn festgestellt wird, dass die Aktualisierung erfolgreich war und/oder dass die vordefinierte Zeitdauer nicht überschritten wurde, übernimmt die erste Komponente den Betrieb des Vakuumsystems 2 und die Software der zweiten Komponente wird entsprechend aktualisiert (Schritt 32).

Sollte die Prüfung dagegen ergeben, dass die Aktualisierung der Software der ersten Komponente nicht erfolgreich war, wechselt das Vakuumsystem 2 in einen sicheren Betriebszustand oder wird weiterhin mittels der zweiten Komponente betrieben (Schritt 34).

In Schritt 36 wird ferner geprüft, ob die Aktualisierung der Software der zweiten Komponente erfolgreich war. Bei einer erfolgreichen Aktualisierung der Software der zweiten Komponente wechselt das Vakuumsystem 2 zurück in den Normalbetrieb (vgl. Schritt 38). Alternativ wechselt das Vakuumsystem 2 bei einer Feststellung, dass die Aktualisierung der Software der zweiten Komponente fehlgeschlagen ist, in einen sicheren Betriebszustand oder wird weiterhin mittels der ersten Komponente betrieben (Schritt 40).

### BEZUGSZEICHENLISTE

- 2: Vakuumsystem
- 4: erste Vakuumpumpe
- 6: zweite Vakuumpumpe
- 8: Zentralsteuereinheit
- 10: Aktuator
- 12: Einsteckgehäuse
- 14: erste Steuerplatine
- 16: zweite Steuerplatine
- 17: Steuerplatine
- 18: Speicher
- 20: Flash-Speicher
- 22: RAM-Speicher
- 24 bis 40: Verfahrensschritte

## Patentansprüche

1. Vakuumsystem (2), welches eine erste Komponente und eine zweite Komponente aufweist, die jeweils einen computerausführbaren Softwarecode zum Betreiben des Vakuumsystems (2) umfassen,
wobei das Vakuumsystem (2) dazu ausgebildet ist, wahlweise durch die erste Komponente und/oder durch die zweite Komponente betrieben zu werden, und
wobei das Vakuumsystem (2) dazu ausgebildet ist, im Falle einer Aktualisierung des Softwarecodes der ersten Komponente zumindest teilweise durch die zweite Komponente weiterbetrieben zu werden.

2. Vakuumsystem (2) nach Anspruch 1,
wobei das Vakuumsystem (2) im Falle einer Aktualisierung des Softwarecodes der ersten Komponente unterbrechungsfrei weiterbetrieben wird.

3. Vakuumsystem (2) nach Anspruch 1 oder 2,
wobei der Softwarecode der zweiten Komponente zumindest teilweise mit dem vor der Aktualisierung vorliegenden Softwarecode der ersten Komponente übereinstimmt.

4. Vakuumsystem (2) nach einem der vorstehenden Ansprüche,
wobei der Softwarecode der ersten Komponente aus mehreren Modulen aufgebaut ist und im Falle einer Aktualisierung nur eines der Module des Softwarecodes der ersten Komponente aktualisiert wird.

5. Vakuumsystem (2) nach einem der vorstehenden Ansprüche,
wobei der Softwarecode der ersten Komponente auf einem ersten Speicher und der Softwarecode der zweiten Komponente auf einem zweiten Speicher gespeichert ist.

6. Vakuumsystem (2) nach einem der vorstehenden Ansprüche,
wobei vor einer Aktualisierung des Softwarecodes der ersten Komponente dieser zumindest teilweise in die zweite Komponente ausgelagert wird und im Falle einer Aktualisierung die zweite Komponente das Vakuumsystem (2) basierend auf dem ausgelagerten Teil des Softwarecodes weiterbetreibt.

7. Vakuumsystem (2) nach einem der vorstehenden Ansprüche,
wobei das Vakuumsystem (2) in einen sicheren Betriebszustand wechselt oder basierend auf einer vorherigen Softwarecodeversion betrieben wird, wenn die Aktualisierung des Softwarecodes der ersten Komponente fehlgeschlagen ist.

8. Vakuumsystem (2) nach einem der vorstehenden Ansprüche,
wobei die erste und zweite Komponente des Vakuumsystems (2) zur Ausführung einer gleichen Teilfunktion des Vakuumsystems (2) vorgesehen sind.

9. Vakuumsystem (2) nach Anspruch 8,
wobei die Teilfunktion im Normalbetrieb durch die erste Komponente und/oder die zweite Komponente ausgeführt wird und im Falle einer Aktualisierung des Softwarecodes der ersten Komponente nur durch die zweite Komponente ausgeführt wird.

10. Vakuumsystem (2) nach einem der vorstehenden Ansprüche,
wobei die erste Komponente und die zweite Komponente jeweils eine Hardwareeinrichtung umfassen, welche zumindest ein Rechenmodul zum Ausführen von computerausführbarem Softwarecode aufweist.

11. Vakuumsystem (2) nach Anspruch 10,
wobei im Normalbetrieb nur die erste Komponente mit dem Vakuumsystem (2) verbunden ist und zur Aktualisierung des Softwarecodes der ersten Komponente die Verbindung zwischen der ersten Komponente und dem Vakuumsystem (2) getrennt wird und eine Verbindung zwischen der zweiten Komponente und dem Vakuumsystem (2) hergestellt wird.

12. Vakuumsystem (2) nach Anspruch 10 oder 11,
wobei die Hardwareeinrichtung und/oder das Rechenmodul als Plug-and-Play-Modul ausgebildet ist.

13. Vakuumsystem (2) nach einem der vorstehenden Ansprüche,
wobei nach einer erfolgreichen Aktualisierung des Softwarecodes der ersten Komponente das Vakuumsystem (2) wieder durch die erste Komponente betrieben wird und der Softwarecode der zweiten Komponente aktualisiert wird.

14. Vakuumsystem (2) nach einem der vorstehenden Ansprüche,
wobei vor und/oder nach einer Aktualisierung des Softwarecodes der ersten Komponente der Softwarecode der ersten Komponente als Backup-Version in einem Backup-Speicher gespeichert wird.

15. Verfahren zum Betreiben eines Vakuumsystem (2), bei dem:
das Vakuumsystem (2) wahlweise durch eine erste Komponente und/oder durch eine zweite Komponente betrieben wird, die jeweils einen computerausführbaren Softwarecode zum Betreiben des Vakuumsystems (2) umfassen, und
das Vakuumsystem (2) im Falle einer Aktualisierung des Softwarecodes der ersten Komponente zumindest teilweise durch die zweite Komponente weiterbetrieben wird.
